# EUROPEAN PATENT SPECIFICATION

(11) **EP 3 556 805 B1**
(45) Date of publication and mention of the grant of the patent: **29.09.2021**
(21) Application number: 17882135.1
(22) Date of filing: 15.12.2017
(51) Int. Cl.: C08L 33/14, B32B 25/14, C08K 5/17, C08K 5/31, C08K 5/3462, C08K 5/405, C08L 33/06

(54) **CARBOXYL-GROUP-CONTAINING ACRYLIC RUBBER COMPOSITION AND RUBBER LAMINATE IN WHICH SAME IS USED**
CARBOXYLGRUPPENHALTIGE ACRYLKAUTSCHUKZUSAMMENSETZUNG UND KAUTSCHUKLAMINAT, IN DEM DIESE VERWENDET WIRD
COMPOSITION DE CAOUTCHOUC ACRYLIQUE CONTENANT UN GROUPE CARBOXYLE ET STRATIFIÉ DE CAOUTCHOUC LA CONTENANT

(30) Priority: 15.12.2016 JP 2016243424; 31.03.2017 JP 2017071757
(43) Date of publication of application: 23.10.2019
(73) Proprietor: Unimatec Co., Ltd., Tokyo 105-0012 (JP)
(72) Inventor: SAITO, Satoru, Kitaibaraki-shi Ibaraki 319-1544 (JP)
(74) Representative: Beckmann, Claus
(86) International application number: PCT/JP2017/045155
(87) International publication number: WO 2018/110701

(56) References cited:
- EP-A1- 2 145 920
- EP-A1- 2 639 059
- WO-A1-2004/033552
- WO-A1-2016/009990
- JP-A- 2001 055 471
- JP-A- 2001 316 554
- JP-A- 2010 024 452
- JP-A- 2015 009 384
- JP-A- 2015 009 385
- JP-A- 2015 009 385
- JP-A- 2015 048 373

## Description

### TECHNICAL FIELD

The present invention relates to a carboxyl group-containing acrylic rubber composition and a rubber laminate using the same. More particularly, the present invention relates to a carboxyl group-containing acrylic rubber composition suitable for crosslinking bonding to a fluororubber composition, and a rubber laminate using the same.

### BACKGROUND ART

Increase in the thermal efficiency of internal combustion engines has proceeded as part of environmental measures, and vehicles carrying a turbo charger system have increasingly spread in order to comply with emission regulation.

Since air guided from the turbocharger to an intercooler or an engine is high-temperature, high-pressure air, hose materials for conveying such air are required to have high heat resistance. Moreover, in supercharger engines in which EGR and PCV systems are mounted, exhaust gas and blow-by gas are introduced into the intake side of the supercharger, thereby attempting to improve thermal efficiency and reduce NOx gas. However, in this case, NOx and SOx in the exhaust gas and blow-by gas to be introduced react with water in the intake gas to generate acid aggregates, such as nitric acid and sulfuric acid. For this reason, the hose materials are also required to have acid resistance, in addition to heat resistance.

In order to solve such problems, there are proposals for rubber laminates obtained by co-crosslinking an organic peroxide crosslinkable fluororubber layer as an inner layer and an acrylic rubber layer as an outer layer (Patent Documents 1 and 2). Specifically, Patent Document 1 discloses a rubber laminate obtained by co-crosslinking bonding, using an organic peroxide, an acrylic rubber layer and a fluororubber layer to which a nitrogen-containing compound, such as amine or imine, can be added. 1,4-Diazabicyclo[2.2.2]octane etc. are exemplified as the nitrogen-containing compound that can be added to the fluororubber layer.

Patent Document 3 discloses a laminate comprising a non-fluororubber layer (A) and a peroxide crosslinkable fluororubber layer (B) laminated on the non-fluororubber layer (A), wherein the non-fluororubber layer (A) is a layer formed from a rubber composition for vulcanization comprising:
(a1) unvulcanized acrylic rubber;
(a2) at least one compound selected from 1,8-diazabicyclo[5.4.0]undecene-7 or a salt thereof, 1,5-diazabicyclo[4.3.0]nonene-5 or a salt thereof, and imidazole; and
(a4) at least one compound selected from iron dithiocarbamate and an aldehyde amine vulcanizing agent.

The unvulcanized acrylic rubber is supposed to be able to have various crosslinking sites, which are not limited to carboxyl groups.

The formed laminate is evaluated by a bonding strength test (T type peel test). The bonding properties are evaluated based on material breakage (evaluation: ○) or interfacial peeling (evaluation: X) at the interface (25°C), and the bonding strength is measured at 25°C or 140°C; however, these values (25°C) are up to 2.0 to 3.2 N/mm.

Patent Documents 4 and 5 disclose a rubber laminate obtained by crosslinking bonding an acrylic rubber layer (A) comprising an acrylic rubber composition containing carboxyl group-containing acrylic rubber and a polyvalent amine compound crosslinking agent, and a fluororubber layer (B) comprising a fluororubber composition containing an organic peroxide crosslinking agent, wherein at least one of the acrylic rubber composition and the fluororubber composition contains a diazabicycloalkene compound (e.g., 1,4-diazabicyclo[2.2.2]octane) and an isocyanurate compound in order to improve crosslinking bonding properties.

A rubber laminate obtained using a phenol salt of 1,8-diazabicyclo[5.4.0]undec-7-ene as the diazabicycloalkene compound is evaluated by a peel test at a peel angle of 180° and a peel rate of 50 mm/min. Although the state of the bonding interface is rubber breakage, the peeling strength T_{F} is 2.1 N/mm. Moreover, when sodium carbonate is further added to the acrylic rubber composition, the T_{F} value is 3.1 N/mm.

### PRIOR ART DOCUMENT

### PATENT DOCUMENT

Patent Document 1 : JP-A-2004-17485
Patent Document 2 : JP-A-2008-195040
Patent Document 3 : JP-A-2014-111359
Patent Document 4 : JP-A-2015-9384
Patent Document 5 : JP-A-2015-9385
Patent Document 6 : JP-A-2010-235955

Other relevant documents are EP-A-2145920 and EP-A-2639059.

### OUTLINE OF THE INVENTION

### PROBLEM TO BE SOLVED BY THE INVENTION

An object of the present invention is to provide an acrylic rubber composition that can form an acrylic rubber composition layer having excellent bonding strength to a fluororubber composition layer, and a rubber laminate obtained by crosslinking bonding the fluororubber composition and the acrylic rubber composition.

### MEANS FOR SOLVING THE PROBLEM

The above object of the present invention can be achieved by a carboxyl group-containing acrylic rubber composition comprising (A) carboxyl group-containing acrylic rubber, (B) 1,4-diazabicyclo[2.2.2]octane, (D) a crosslinking agent for carboxyl group-containing acrylic rubber, and (E) a guanidine-based, thiuram-based, or thiourea-based crosslinking accelerator. The carboxyl group-containing acrylic rubber composition may further comprise (C) a primary amine represented by the general formula RNH₂, wherein R is an aliphatic hydrocarbon group having 1 to 30 carbon atoms, thereby increasing interlaminar bonding force.

Further, the present invention provides a target rubber laminate prepared by crosslinking bonding a layer of the carboxyl group-containing acrylic rubber composition and a layer of an organic peroxide crosslinkable fluororubber composition comprising (a) organic peroxide crosslinkable fluororubber, (b) an organic peroxide crosslinking agent, and (c) a polyfunctional unsaturated compound crosslinking aid.

### EFFECT OF THE INVENTION

When a layer of a carboxyl group-containing acrylic rubber composition to be laminated on a layer of an organic peroxide crosslinkable fluororubber composition is compounded with 1,4-diazabicyclo[2.2.2]octane, which reacts with carboxyl groups, and a specific crosslinking accelerator, a strong crosslinking bonding layer is formed at the interface between the carboxyl group-containing acrylic rubber composition layer and the organic peroxide crosslinkable fluororubber composition layer. It was also found that interlaminar bonding force could be increased by adding a primary amine represented by the general formula RNH₂.

In contrast, in the case of 1,8-diazabicyclo[5.4.0]undecene-7 (salt) used in the Examples of Patent Documents 3 to 5, as shown in the results of Comparative Examples (see Table 8) using formulations A-7 to A-8 and formulations C-1 to C-4 of carboxyl group-containing acrylic rubber compositions, described later, the produced rubber laminates, which are crosslinking bonded products with a peroxide crosslinkable fluororubber composition, show a peeling state in which interfacial peeling occurs at an interfacial peeling rate of 100% (a state in which the rubber layers are peeled along the interface without breakage) or interfacial peeling partially occurs.

Moreover, Patent Documents 4 and 5 indicate that at least one of the acrylic rubber composition and the fluororubber composition may contain a diazabicycloalkene compound. However, as shown in the results of Comparative Example 16 (see Table 9) using a formulation G-4 (using 1,4-diazabicyclo[2.2.2]octane) of a fluororubber composition, described later, the produced rubber laminate, which is a crosslinking bonded product with a carboxyl group-containing acrylic rubber composition, has a peeling form in which interfacial peeling occurs at an interfacial peeling rate of 100%.

### EMBODIMENTS FOR CARRYING OUT THE INVENTION

Each constituent component of the carboxyl group-containing acrylic rubber composition is explained below.

The carboxyl group-containing acrylic rubber as the component (A) used herein is obtained by copolymerizing a carboxyl group-containing unsaturated compound and at least one (meth)acrylate selected from alkyl (meth)acrylate containing an alkyl group having 1 to 8 carbon atoms and alkoxyalkyl (meth)acrylate containing an alkoxyalkyl group having 2 to 8 carbon atoms. Here, the term (meth)acrylate refers to acrylate or methacrylate.

Examples of alkyl (meth)acrylate include methyl (meth)acrylate, ethyl (meth)acrylate, propyl (meth)acrylate, isopropyl (meth)acrylate, n-butyl (meth)acrylate, n-hexyl (meth)acrylate, 2-ethylhexyl (meth)acrylate, n-octyl (meth)acrylate. Alkyl groups having a longer chain length are generally advantageous in terms of cold resistance, but are disadvantageous in terms of oil resistance. Alkyl groups having a shorter chain length show an opposite tendency. In terms of the balance between oil resistance and cold resistance, ethyl acrylate and n-butyl acrylate are preferably used.

Moreover, examples of alkoxyalkyl (meth)acrylate include methoxymethyl (meth)acrylate, methoxyethyl (meth)acrylate, ethoxyethyl (meth)acrylate, n-butoxyethyl (meth)acrylate, ethoxypropyl (meth)acrylate, methoxyethoxyethyl (meth)acrylate, ethoxyethoxyethyl (meth)acrylate and the like; preferably 2-methoxyethyl acrylate and 2-ethoxyethyl acrylate.

Although each of such alkyl (meth)acrylate and alkoxyalkyl (meth)acrylate may be used singly, it is preferable that the former is used at a ratio of 40 to 100 wt.%, and that the latter is used at a ratio of 60 to 0 wt.%. When an alkoxyalkyl acrylate is copolymerized, oil resistance and cold resistance are well balanced. However, when the copolymerization ratio of alkoxyalkyl acrylate is greater than this range, normal state physical properties and heat resistance tend to decrease.

Examples of the carboxyl group-containing unsaturated compound include monoalkyl esters, such as methyl, ethyl, propyl, isopropyl, n-butyl, and isobutyl esters of maleic acid or fumaric acid; and monoalkyl esters, such as methyl, ethyl, propyl, isopropyl, n-butyl, and isobutyl esters of itaconic acid or citraconic acid; and maleic acid mono-n-butyl ester, fumaric acid monoethyl ester, and fumaric acid mono-n-butyl ester are preferably used. In addition to them, unsaturated monocarboxylic acid such as acrylic acid or methacrylic acid is used.

These carboxyl group-containing unsaturated compounds are used at a copolymerization ratio of about 0.5 to 10 wt%, preferably about I to 7 wt%, in a carboxyl group-containing acrylic rubber. When the copolymerization ratio is lower than the above, the vulcanization is insufficient thereby to deteriorate the value of compression set. On the other hand, the copolymerization ratio is higher than the above, scorch readily causes. Incidentally, since the copolymerization reaction is performed in such a manner that the polymerization conversion rate is 90% or more, the weight ratio of each charged monomer is approximately the copolymerization component weight ratio of the resulting copolymer.

In the carboxyl group-containing acrylic rubber, another copolymerizable ethylenic unsaturated monomer, such as styrene, α-methylstyrene, vinyltoluene, vinylnaphthalene, (meth)acrylonitrile, acrylic acid amide, vinyl acetate, cyclohexyl acrylate, benzyl acrylate, 2-hydroxyethyl acrylate, 4-hydroxybutyl acrylate, ethylene, propylene, piperylene, butadiene, isoprene, or pentadiene, can be further copolymerized at a ratio of about 10 wt%. or less.

Furthermore, in order to improve kneading processability, extrusion processability, and other properties, a polyfunctional (meth)acrylate or oligomer containing a glycol residue in the side chain can be further copolymerized, if necessary. Examples thereof include di(meth)acrylates of alkylene glycols, such as ethylene glycol, propylene glycol, 1,4-butanediol, 1,6-hexanediol, and 1,9-nonanediol; poly(meth)acrylates, such as neopentyl glycol, tetraethylene glycol, tripropylene glycol, and polypropylene glycol; bisphenol A·ethylene oxide adduct diacrylate, dimethylol tricyclodecane diacrylate, glycerol methacrylate acrylate, 3-acryloyloxyglycerol monomethacrylate, and the like.

1,4-Diazabicyclo[2.2.2]octane as the component (B) is used at a ratio of 0.01 to 3 parts by weight, preferably 0.1 to 2 parts by weight, based on 100 parts by weight of the carboxyl group-containing acrylic rubber. If the ratio of the component (B) is less than this range, sufficient bonding strength to fluororubber cannot be obtained. In contrast, if the ratio of the component (B) is greater than this range, the bonding strength to fluororubber is not improved, which is not economical. As 1,4-diazabicyclo[2.2.2]octane, a commercial product (e.g., a product of Wako Pure Chemical Industries) can be used as it is.

The primary amine represented by the general formula RNH₂ as the component (C) is used at a ratio of 0 to 5 parts by weight, preferably 0.1 to 3 parts by weight, based on 100 parts by weight of the carboxyl group-containing acrylic rubber. However, R is an aliphatic hydrocarbon group having 1 to 30 carbon atoms, preferably 8 to 30 carbon atoms in terms of vapor pressure. If the ratio of the component (C) is greater than this range, improvement in bonding strength cannot be expected, which is not economical. The addition of such a primary amine can increase interlaminar bonding force.

Examples of the primary amine represented by the general formula RNH₂ include methylamine, ethylamine, n-propylamine, isopropylamine, n-butylamine, isobutylamine, 1-methylpropylamine, tert-butylamine, n-pentylamine, 1-methylbutylamine, 3-methylbutylamine, cyclopentylamine, n-hexylamine, cyclohexylamine, n-heptylamine, n-octylamine, 2-ethylhexylamine, n-nonylamine, n-decylamine, n-undecylamine, n-dodecylamine, n-tridecylamine, n-tetradecylamine, n-pentadecylamine, n-hexadecylamine, n-heptadecylamine, oleyl amine, stearyl amine, and the like. These can be used singly or in combination of two or more.

Examples of the crosslinking agent for carboxyl group-containing acrylic rubber as the component (D) include polyvalent amine compounds or derivatives thereof, specifically aliphatic polyvalent amine compounds or carbonates thereof, aliphatic polyvalent amines in which the amino group is protected by an organic group, aromatic polyvalent amines, and the like.

Examples of aliphatic polyvalent amine compound include hexamethylenediamine and N,N'-dicinnamylidene-1,6-hexanediamine. Examples of carbonate thereof include hexamethylenediamine carbamate. Examples of aliphatic polyvalent amine in which the amino group is protected by an organic group include the compounds disclosed in Patent Document 6.

Examples of aromatic polyvalent amine compound include 4,4'-methylenedianiline, m-phenylenediamine, p-phenylenediamine, 4,4'-diaminodiphenyl ether, 4,4'-bis(4-aminophenoxy)biphenyl, m-xylylenediamine, p-xylylenediamine, 1,3,5-benzenetriamine, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, and the like.

Among these polyvalent amine compounds, hexamethylenediamine carbamate, 4,4'-diaminodiphenyl ether, and 2,2'-bis[4-(4-aminophenoxy)phenyl]propane are preferable.

The above crosslinking agent is used at a ratio of 0.1 to 5 parts by weight, preferably 0.5 to 2 parts by weight, based on 100 parts by weight of the acrylic rubber. If the amount of the crosslinking agent is less than this range, crosslinking is insufficient, which leads to decrease in the mechanical properties of the crosslinked product and reduction in crosslinking rate. If the amount of the crosslinking agent is greater than this range, crosslinking may progress excessively, and the elasticity of the crosslinked product may be reduced.

The carboxyl group-containing acrylic rubber composition is compounded with, together with a crosslinking agent, a guanidine-based, thiuram-based, or thiourea-based crosslinking accelerator as the component (E). Examples of guanidine-based compound include 1,3-diphenylguanidine, 1,3-di-o-tolylguanidine, 1,1,3,3-tetramethylguanidine, and the like; particularly preferably 1,3-di-o-tolylguanidine. Examples of thiuram-based compound include tetramethylthiuram disulfide and the like. Moreover, examples of thiourea-based compound include N,N'-diphenylthiourea, and the like.

The above crosslinking accelerator is used at a ratio of 0.5 to 5 parts by weight, preferably 0.5 to 3 parts by weight, based on 100 parts by weight of the acrylic rubber.

The carboxyl group-containing acrylic rubber composition may contain, if necessary, various additives, such as fillers, processing aids, plasticizers, softeners, antioxidants, coloring agents, stabilizers, adhesive aids, mold release agents, conductivity-imparting agents, thermal conductivity-imparting agents, surface non-adhesive agents, tackifiers, flexibility-imparting agents, heat resistance-improving agents, flame retardants, ultraviolet absorbers, oil resistance-improving agents, anti-scorching agents, and lubricants.

Examples of filler include silica, such as basic silica and acidic silica; metal oxides, such as magnesium oxide, zinc oxide, calcium oxide, titanium oxide, and aluminum oxide; metal hydroxides, such as magnesium hydroxide, aluminum hydroxide, and calcium hydroxide; metal carbonates, such as magnesium carbonate, aluminum carbonate, calcium carbonate, and barium carbonate; silicates, such as magnesium silicate, calcium silicate, sodium silicate, and aluminum silicate; sulfates, such as aluminum sulfate, calcium sulfate, and barium sulfate; synthetic hydrotalcite; metal sulfides, such as molybdenum disulfide, iron sulfide, and copper sulfide; diatomaceous earth, asbestos, lithopone (zinc sulfide/barium sulfide), graphite, carbon black (MT carbon black, SRF carbon black, FEF carbon black, etc.), fluorinated carbon, calcium fluoride, coke, quartz fine powder, zinc white, talc, mica powder, wollastonite, carbon fiber, aramid fiber, various whiskers, glass fiber, organic reinforcing agents, organic fillers, and the like.

Examples of processing aid include higher fatty acids, such as stearic acid, oleic acid, palmitic acid, and lauric acid; higher fatty acid salts, such as sodium stearate and zinc stearate; higher fatty acid amides, such as amide stearate and amide oleate; higher fatty acid esters, such as ethyl oleate; petroleum-based waxes, such as carnauba wax and ceresin wax; polyglycols, such as ethylene glycol, glycerol, and diethylene glycol; aliphatic hydrocarbons, such as vaseline and paraffin; silicone-based oils, silicone-based polymers, low-molecular-weight polyethylene, phthalic acid esters, phosphoric acid esters, rosin, (halogenated) dialkyl amine, (halogenated) dialkyl sulfone, surfactants, and the like.

Examples of plasticizer include epoxy resin and derivatives of phthalic acid and sebacic acid. Examples of softener include lubricating oil, process oil, coal tar, castor oil, and calcium stearate. Examples of antioxidant include phenylenediamines, phosphates, quinolines, cresols, phenols, dithiocarbamate metal salts, and the like.

The carboxyl group-containing acrylic rubber composition can be prepared by compounding carboxyl group-containing acrylic rubber with 1,4-diazabicyclo[2.2.2]octane, a crosslinking agent, a crosslinking accelerator, optionally a primary amine represented by the general formula RNH₂, and optionally used other compounding agents using a Banbury mixer, a pressurizing kneader, an open roll, or the like.

Next, each constituent component of the organic peroxide crosslinkable fluororubber composition that can be crosslinking-bonded to the acrylic rubber composition of the present invention is explained below.

The organic peroxide crosslinkable fluororubber as the component (a) is a copolymer of a fluorine-containing unsaturated monomer having an iodine atom and or a bromine atom in the polymer main chain and/or side chain.

Examples of the fluorine-containing unsaturated monomer include tetrafluoroethylene, vinylidene fluoride, hexafluoropropylene, trifluoroethylene, chlorotrifluoroethylene, 1,1,3,3,3-pentafluoropropylene, perfluoro(methyl vinyl ether), perfluoro(ethyl vinyl ether), perfluoro(propyl vinyl ether), and the like.

Examples of the organic peroxide crosslinkable fluororubber include vinylidene fluoride-hexafluoropropylene copolymer, vinylidene fluoride-tetrafluoroethylene-hexafluoropropylene terpolymer, vinylidene fluoride-tetrafluoroethylene-perfluoro(methyl vinyl ether) terpolymer, tetrafluoroethylene-ethylene-perfluoro(methyl vinyl ether) terpolymer, tetrafluoroethylene-propylene copolymer, vinylidene fluoride-propylene copolymer, tetrafluoroethylene-vinylidene fluoride-propylene terpolymer, and the like.

In addition to the above fluorine-containing unsaturated monomer, a fluorine-containing unsaturated monomer for modifying the properties of fluororubber may be copolymerized at a ratio of 3% by weight or less. Examples of the fluorine-containing unsaturated monomer for modifying the properties of fluororubber include fluorine-containing diene compounds, such as perfluoro(3,6-dioxa-1,7-octadiene), 3,3,4,4,5,5,6,6-octafluoro-1,7-octadiene, and 3,3,4,4,5,5,6,6,7,7,8,8,9,9,10,10-hexadecafluoro-1,9-decadiene.

Further, a non-fluorine unsaturated monomer, such as propylene or ethylene, may be copolymerized at a ratio of 30% by weight or less.

An iodine atom and or a bromine atom, which are crosslinking sites of the organic peroxide crosslinkable fluororubber, can be introduced into the polymer main chain terminal by performing a polymerization reaction in the presence of a fluorine-containing dihalogen compound, such as 1,4-diiodooctafluorobutane or 1-bromo-2-iodotetrafluoroethane. When monohalogeno fluorine-containing ethylene, such as 1-iodotrifluoroethylene, 1,1-difluoro-2-iodoethylene, or 1,1-difluoro-2-bromoethylene, is copolymerized, an iodine atom or a bromine atom can be introduced into the inside of the polymer main chain. When perfluoro(2-bromoethyl vinyl ether), 4-iodo-3,3,4,4-tetrafluoro-1-butene, or the like is copolymerized, an iodine atom or a bromine atom can be introduced into the polymer side chain.

Examples of the organic peroxide crosslinking agent as the component (b) used to crosslink the organic peroxide crosslinkable fluororubber include dialkyl peroxides, such as dicumyl peroxide, di-tert-butyl peroxide, 2,5-dimethyl-2,5-di(tert-butylperoxy)-3-hexyne, 2,5-dimethyl-2,5-di(tert-butylperoxy)hexane, and 1,3-bis(tert-butylperoxyisopropyl)benzene; diacyl peroxides, such as benzoyl peroxide and isobutyryl peroxide; peroxy esters, such as 2,5-dimethyl-2,5-bis(benzoylperoxy)hexane and tert-butylperoxy isopropyl carbonate; and the like. Among these, 2,5-dimethyl-2,5-di(tert-butylperoxy)hexane is preferable. These can be used singly or in combination of two or more.

The organic peroxide crosslinking agent is used at a ratio of 0.1 to 5 parts by weight, preferably 0.3 to 3 parts by weight, based on 100 parts by weight of the organic peroxide crosslinkable fluororubber. If the amount of the organic peroxide crosslinking agent is less than this range, crosslinking of fluororubber is insufficient, which may lead to decrease in the mechanical properties of the crosslinked product. Further, if the amount of the organic peroxide crosslinking agent is greater than this range, excessive crosslinking progresses, which may lead to decrease in the physical properties, such as elongation, of the crosslinked product.

As the component (c), a polyfunctional unsaturated compound (e.g., triallyl isocyanurate) is used as a crosslinking aid for the organic peroxide crosslinkable fluororubber. The amount thereof is 0.1 to 10 parts by weight, preferably 1 to 5 parts by weight, based on 100 parts by weight of the organic peroxide crosslinkable fluororubber. If the amount of the component (c) is less than this range, crosslinking is insufficient, which may make it difficult to maintain the shape of the crosslinked product, and may lead to decrease in the mechanical properties. In contrast, if the amount of the component (c) is greater than this range, improvement in various characteristics, such as mechanical properties and heat resistance, cannot be expected, which is not economical.

Moreover, the organic peroxide crosslinkable fluororubber composition may be compounded with, in addition to the above essential components, compounding agents that are generally used in the field of rubber processing. Examples of such compounding agent include the above-mentioned inorganic fillers, such as carbon black and silica; acid acceptors, crosslinking accelerators, light stabilizers, plasticizers, processing aids, lubricants, adhesives, lubricating agent, flame retardants, antifungal agents, antistatic agents, coloring agents, silane coupling agents, crosslinking retardants, and the like. The amounts of these compounding agents are not particularly limited within a range that does not inhibit the objects and effects of the present invention. Their amounts according to the compounding purpose can be properly compounded.

The organic peroxide crosslinkable fluororubber composition can be prepared by compounding the above organic peroxide crosslinkable fluororubber with an organic peroxide crosslinking agent, a polyfunctional unsaturated compound crosslinking aid, and optionally used other compounding agents using a Banbury mixer, a pressurizing kneader, an open roll, or the like.

The method for producing a rubber laminate comprising the acrylic rubber composition of the present invention and the fluororubber composition mentioned above is not particularly limited. For example, the rubber laminate can be produced by separately forming the carboxyl group-containing acrylic rubber composition and the organic peroxide crosslinkable fluororubber composition into uncrosslinked sheets of desired shape using a press, a roll, or an extruder, then superimposing the uncrosslinked sheets, and performing crosslinking by pressure heating using a hot press or a vulcanization can.

Alternatively, the rubber laminate can be produced by co-extrusion of the carboxyl group-containing acrylic rubber composition, which forms an outer layer, and the organic peroxide crosslinkable fluororubber composition, which forms an inner layer, using an extruder to form an uncrosslinked rubber tube, and then performing crosslinking by pressure heating using a vulcanization can.

Pressure heating using a hot press is generally performed at a temperature of about 140 to 200°C at a pressure of about 0.2 to 15 MPa for about 5 to 60 minutes. Pressure heating using a vulcanization can is generally performed at a temperature of about 130 to 160°C, for example, at a pressure of about 0.18 MPa for about 30 to 120 minutes.

Moreover, the obtained rubber laminate can be further subjected to post-curing (secondary crosslinking) to thereby improve the bonding properties, mechanical properties, compression set, etc., thereof.

The rubber laminate comprising a layer of the acrylic rubber composition of the present invention and a layer of a fluororubber composition mentioned above is not limited to a form in which one acrylic rubber layer and one fluororubber layer are laminated. These layers may be alternately laminated, or multiple acrylic rubber composition layers may be used.

Since the thus-obtained rubber laminate comprising a layer of the acrylic rubber composition of the present invention and a layer of a fluororubber composition mentioned above comprises an acrylic rubber layer crosslinked with carboxyl group-containing acrylic rubber and a fluororubber layer crosslinked with organic peroxide crosslinkable fluororubber, it has excellent heat resistance, oil resistance, and acid resistance. Furthermore, because its interface is firmly crosslinking-bonded, the rubber laminate of the present invention can be particularly suitably used as a molding material for hoses, such as oil tubes, fuel hoses, air hoses, air duct hoses, turbocharger hoses, PCV hoses, EGR hoses, intercooler hoses, which are for transport machinery, such as automobiles.

### EXAMPLES

The following describes the present invention with reference to Examples.

### Example 1

### < Carboxyl group-containing acrylic rubber composition >

**Basic Formulation A**

| | |
|---|---|
| Acrylic rubber A (Noxtite PA-522, Tg:-30°C) produced by Unimatec Co., Ltd.) | 100 parts by weight |
| FEF carbon black (Seast GSO, produced by Tokai Carbon Co., Ltd.) | 55 parts by weight |
| Stearic acid (TST, produced by Miyoshi Oil & Fat Co., Ltd.) | 1 part by weight |
| Stearyl amine (Farmin 80, produced by Kao Chemical Corporation) | 0.5 part by weight |
| 4,4'-Bis(α,α'-dimethylbenzyl)diphenylamine | 2 parts by weight |
| (Nocrac CD, produced by Ouchi Shinko Chemical Industrial Co., Ltd.) | |
| Hexamethylenediamine carbamate (Cheminox AC6F, produced by Unimatec Co., Ltd.) | 0.6 parts by weight |
| 1,3-Di-o-tolylguanidine (Nocceler DT, produced by Ouchi Shinko Chemical Industrial Co., Ltd.) | 2 parts by weight |
| 1,4-diazabicyclo[2.2.2]octane (produced by Wako Pure Chemical Industries, Ltd.) | 1 parts by weight |

Formulation A-1:
In the basic formulation A, 1,4-diazabicyclo[2.2.2]octane was not used.

Formulation A-2:
The basic formulation A was used as it was.

Formulation A-3: (refernce)
In the basic formulation A, stearyl amine was not used.

Formulation A-4: (reference)
In the basic formulation A, 0.7 parts by weight of 2,2'-bis[4-(4-aminophenoxy)phenyl]propane (produced by Wako Pure Chemical Industries, Ltd.) was used in place of hexamethylenediamine carbamate, and neither stearyl amine nor 1,4-diazabicyclo[2.2.2]octane was used.

Formulation A-5:
In the basic formulation A, 0.7 parts by weight of 2,2'-bis[4-(4-aminophenoxy)phenyl]propane (produced by Wako Pure Chemical Industries, Ltd.) was used in place of hexamethylenediamine carbamate.

Formulation A-6: (reference)
In the basic formulation A, 0.7 parts by weight of 2,2'-bis[4-(4-aminophenoxy)phenyl]propane (produced by Wako Pure Chemical Industries, Ltd.) was used in place of the hexamethylenediamine carbamate, and stearyl amine was not used.

Formulation A-7: (reference)
In the basic formulation A, neither stearyl amine nor 1,4-diazabicyclo[2.2.2]octane was used, and 1 part by weight of triallyl isocyanurate (Taic, produced by Nippon Kasei Co., Ltd.: active ingredient 100%) and 1 part by weight of 1,8-diazabicyclo[5.4.0]undecene-7 (produced by Tokyo Chemical Industry Co., Ltd.) were additional by used.

Formulation A-8: (reference)
In the basic formulation A-7, 0.7 parts by weight of 2,2'-bis[4-(4-aminophenoxy)phenyl]propane (produced by Wako Pure Chemical Industries, Ltd.) was used in place of hexamethylenediamine carbamate.

The above formulations (compositions) were each kneaded using an open roll. Then, the acrylic rubber compositions were subjected to press crosslinking at 180°C for 8 minutes and secondary crosslinking at 175°C for 4 hours, and the fluororubber compositions, described later, were subjected to press crosslinking at 180°C for 10 minutes and secondary crosslinking at 200°C for 6 hours.

The used acrylic rubber compositions and the obtained crosslinked products were subjected to a crosslinking test, measurement of normal state physical properties, an air oven aging test, and measurement of compression set.
Crosslinking test: according to JIS K6300-2 (2001) (180°C, 12 minutes)
   Rotorless Rheometer RLC-3 (produced by Toyo Seiki
   Seisaku-sho, Ltd.) was used
tc (10): time required for crosslinking torque to reach ML + (MH - ML) x 0.1
tc (90): time required for crosslinking torque to reach ML + (MH - ML) x 0.9
   ML: minimum torque
   MH: maximum torque
Normal state physical properties: according to JIS K6251 (2010) and
   JIS K6253 (2012)
Air oven aging test:
   Acrylic rubber: according to JIS K6257 (2010) (175°C, 75 hours)
   Fluororubber, described later: according to JIS K6257 (2010)
      (230°C, 70 hours)
   The variation of physical properties was calculated
Compression set:
   Acrylic rubber: according to JIS K6262 (2013) (150°C, 70 hours)
   Fluororubber, described later: according to ASTM D395 (2016) Method B
   P24 O rings were measured (200°C, 70 hours)

Table 1 below shows the obtained results.

**Table 1**

| Formulation | | A-1 | A-2 | A-3 | A-4 | A-5 | A-6 | A-7 | A-8 |
|---|---|---|---|---|---|---|---|---|---|
| Crosslinking test | | | | | | | | | |
| tc (10) | (min) | 0.58 | 0.58 | 0.51 | 1.63 | 2.36 | 1.95 | 0.35 | 1.39 |
| tc (90) | (min) | 4.52 | 5.10 | 3.90 | 8.36 | 8.94 | 8.64 | 1.91 | 7.89 |
| ML | (N·m) | 0.12 | 0.12 | 0.13 | 0.12 | 0.11 | 0.11 | 0.13 | 0.12 |
| MH | (N·m) | 0.72 | 0.71 | 0.78 | 0.49 | 0.39 | 0.45 | 0.78 | 0.42 |

| Normal state physical properties | | | | | | | | | |
|---|---|---|---|---|---|---|---|---|---|
| Hardness (Duro A) | | 59 | 62 | 62 | 55 | 57 | 57 | 61 | 58 |
| 100% modulus (MPa) | | 4.0 | 5.2 | 5.2 | 2.5 | 2.7 | 2.9 | 6.0 | 2.9 |
| Breaking strength (MPa) | | 11.9 | 11.8 | 12.5 | 9.6 | 10.2 | 10.3 | 11.7 | 10.6 |
| Elongation at break (%) | | 230 | 200 | 210 | 290 | 310 | 290 | 180 | 290 |

| Air oven aging test | | | | | | | | | |
|---|---|---|---|---|---|---|---|---|---|
| Hardness change (Duro A) | | +3 | +0 | +0 | +3 | +3 | +3 | +4 | +6 |
| 100% modulus change (%) | | -4 | -20 | -13 | -32 | -30 | -42 | -17 | -16 |
| Breaking strength change (%) | | -15 | -12 | -14 | -35 | -29 | -35 | -3 | -29 |
| Elongation at break change (%) | | +9 | +20 | +10 | +24 | +16 | +24 | +17 | +10 |
| Compression set (%) | | 10 | 15 | 12 | 14 | 24 | 28 | 12 | 24 |

Basic formulation B:
In the basic formulation A, the same amount (100 parts by weight) of acrylic rubber B (Noxtite PA-526B, produced by Unimatec Co., Ltd.; Tg: -26°C) was used in place of the acrylic rubber A, thereby preparing formulations B-1 to B-6 corresponding to the formulations A-1 to A-6, respectively.

Each formulation was subjected to kneading, primary crosslinking, secondary crosslinking, and measurement of various characteristics in the same manner as described above. Table 2 below shows the obtained results. In the formulation B-5, measurement could not be carried out because molding could not be performed.

**Table 2**

| Formulation | B-1 | B-2 | B-3 | B-4 | B-5 | B-6 |
|---|---|---|---|---|---|---|
| Crosslinking test | | | | | | |
| tc (10) (min) | 0.76 | 0.74 | 0.66 | 1.92 | 2.2 7 | 2.09 |
| tc (90) (min) | 6.99 | 6.92 | 6.05 | 8.96 | 9.14 | 9.04 |
| ML (N-m) | 0.13 | 0.13 | 0.13 | 0.12 | 0.12 | 0.12 |
| MH (N·m) | 0.58 | 0.57 | 0.68 | 0.36 | 0.27 | 0.32 |

| Normal state physical properties | | | | | | |
|---|---|---|---|---|---|---|
| Hardness (Duro A) | 58 | 58 | 58 | 56 | - | 58 |
| 100% modulus (MPa) | 3.0 | 3.1 | 3.6 | 2.3 | - | 2.3 |
| Breaking strength (MPa) | 11.0 | 11.2 | 11.8 | 9.5 | - | 9.3 |
| Elongation at break (%) | 290 | 280 | 260 | 320 | - | 280 |

| Air oven aging test | | | | | | |
|---|---|---|---|---|---|---|
| Hardness change (Duro A) | +1 | +6 | +1 | +3 | - | +5 |
| 100% modulus change (%) | -20 | -14 | -12 | -25 | - | -16 |
| Breaking strength change (%) | -19 | -19 | -16 | -23 | - | -19 |
| Elongation at break change (%) | +17 | +14 | +12 | +25 | - | +43 |
| Compression set (%) | 19 | 22 | 17 | 16 | - | 28 |

Formulation C-1: (reference)
In the formulation A-3, the same amount (100 parts by weight) of 1,8-diazabicyclo[5.4.0]undecene-7 was used in place of 1,4-diazabicyclo[2.2.2]octane.

Formulation C-2: (reference)
In the formulation C-1, 0.7 parts by weight of 2,2'-bis[4-(4-aminophenoxy)phenyl]propane (produced by Wako Pure Chemical Industries, Ltd.) was used in place of hexamethylenediamine carbamate.

Formulations C-3 to C-4: (reference)
In the formulation C-1 to the formulation C-2, the same amount (100 parts by weight) of acrylic rubber B was used in place of the acrylic rubber A.

Each formulation was subjected to kneading, primary crosslinking, secondary crosslinking, and measurement of various characteristics in the same manner as described above. Table 3 below shows the obtained results. In the formulation C-4, measurement of compression set could not be carried out because molding could not be performed.

**Table 3**

| Formulation | C-1 | C-2 | C-3 | C-4 |
|---|---|---|---|---|
| Crosslinking test | | | | |
| tc (10) (min) | 0.38 | 1.74 | 0.43 | 0.92 |
| tc (90) (min) | 2.66 | 8.44 | 4.04 | 7.81 |
| ML (N·m) | 0.14 | 0.12 | 0.15 | 0.14 |
| MH (N·m) | 0.76 | 0.38 | 0.58 | 0.18 |

| Normal state physical properties | | | | |
|---|---|---|---|---|
| Hardness (Duro A) | 63 | 62 | 61 | 57 |
| 100% modulus (MPa) | 6.1 | 3.4 | 3.7 | 1.5 |
| Breaking strength (MPa) | 12.6 | 10.8 | 11.9 | 7.1 |
| Elongation at break (%) | 190 | 300 | 270 | 780 |

| Air oven aging test | | | | |
|---|---|---|---|---|
| Hardness change (Duro A) | +6 | +6 | +7 | +2 |
| 100% modulus change (%) | -19 | -26 | -16 | -20 |
| Breaking strength change (%) | -13 | -34 | -19 | -48 |
| Elongation at break change (%) | +11 | +7 | +4 | +23 |
| Compression set (%) | 14 | 32 | 28 | - |

Basic formulation D: (reference)
In the formulation A-6, the amount of 2,2'-bis[4-(4-aminophenoxy)phenyl]propane was changed to 1.2 parts by weight, and 1 part by weight of various crosslinking accelerator was used.

Formulation D-1:
In the basic formulation D, crosslinking accelerator (1,3-di-o-tolylguanidine) was not used.

Formulation D-2:
In the basic formulation D, 1,3-di-o-tolylguanidine was used as the crosslinking accelerator.

Formulation D-3:
In the basic formulation D, 1,3-diphenylguanidine was used as the crosslinking accelerator.

Formulation D-4:
In the basic formulation D, 1,1,3,3-tetramethylguanidine was used as the crosslinking accelerator.

Formulation D-5:
In the basic formulation D, N,N'-diphenylthiourea was used as the crosslinking accelerator.

Formulation D-6:
In the basic formulation D, tetramethylthiuram disulfide was used as the crosslinking accelerator.

Each formulation was subjected to kneading, primary crosslinking, secondary crosslinking, and measurement of various characteristics in the same manner as described above. Table 4 below shows the obtained results.

**Table 4**

| Formulation | D-1 | D-2 | D-3 | D-4 | D-5 | D-6 |
|---|---|---|---|---|---|---|
| Crosslinking test | | | | | | |
| tc (10) (min) | 1.79 | 1.82 | 1.69 | 1.55 | 1.46 | 2.90 |
| tc (90) (min) | 8.59 | 8.60 | 8.38 | 8.26 | 8.55 | 9.19 |
| ML (N·m) | 0.11 | 0.11 | 0.11 | 0.12 | 0.11 | 0.11 |
| MH (N·m) | 0.64 | 0.61 | 0.57 | 0.40 | 0.35 | 0.43 |

| Normal state physical properties | | | | | | |
|---|---|---|---|---|---|---|
| Hardness (Duro A) | 62 | 63 | 61 | 66 | 59 | 63 |
| 100% modulus (MPa) | 4.9 | 5.6 | 4.9 | 6.0 | 3.9 | 4.9 |
| Breaking strength (MPa) | 12.5 | 12.1 | 11.9 | 12.4 | 11.7 | 11.6 |
| Elongation at break (%) | 190 | 190 | 210 | 190 | 250 | 220 |

| Air oven aging test | | | | | | |
|---|---|---|---|---|---|---|
| Hardness change (Duro A) | +0 | +2 | +4 | +3 | +3 | +2 |
| 100% modulus change (%) | -25 | -26 | -18 | -16 | -19 | -26 |
| Breaking strength change (%) | -16 | -11 | -9 | -9 | -12 | -13 |
| Elongation at break change (%) | +32 | +26 | +19 | +21 | +26 | +18 |
| Compression set (%) | 19 | 19 | 25 | 42 | 47 | 21 |

Formulations E-1 to E-3:
These formulations correspond to the formulations B-1 to B-3, respectively.

Formulation E-4:
In the formulation E-2, 1,3-di-o-tolylguanidine was not used.

Formulation E-5:
In the formulation E-2, the same amount (2 parts by weight) of 1,3-diphenylguanidine (Nocceler D, produced by Ouchi Shinko Chemical Industrial Co., Ltd.) was used in place of 1,3-di-o-tolylguanidine.

Formulation E-6:
In the formulation E-5, 1,4-diazabicyclo[2.2.2]octane was not used.

Formulation E-7:
In the formulation E-5, 1.2 parts by weight of 2,2'-bis[4-(4-aminophenoxy)phenyl]propane was used in place of hexamethylenediamine carbamate, and stearyl amine was not used.

Formulation E-8:
In the formulation E-7, 1,4-diazabicyclo[2.2.2]octane was not used.

Formulation E-9:
In the formulation E-2, the amount of FEF carbon black was changed to 60 parts by weight, and 5 parts by weight of polyether ester-based plasticizer (Adekacizer RS700, produced by Adeka Corporation) and 1 part by weight of liquid paraffin (70S, produced by Sanko Chemical Industry Co., Ltd.) were further used.

Formulation E-10:
In the formulation E-9, 1,4-diazabicyclo[2.2.2]octane was not used.

Each formulation was subjected to kneading, primary crosslinking, secondary crosslinking, and measurement of normal state physical properties in the same manner as described above. Table 5 below shows the obtained results.

**Table 5**

| Formulation | | E-1 | E-2 | E-3 | E-4 | E-5 | E-6 | E-7 | E-8 | E-9 | E-10 |
|---|---|---|---|---|---|---|---|---|---|---|---|
| Crosslinking test | | | | | | | | | | | |
| tc (10) | (min) | 0.76 | 0.74 | 0.66 | 0.76 | 0.65 | 0.65 | 1.48 | 1.22 | 0.71 | 0.73 |
| tc (90) | (min) | 6.99 | 6.92 | 6.05 | 7.66 | 5.93 | 5.76 | 8.25 | 7.98 | 6.77 | 6.84 |
| ML | (N·m) | 0.13 | 0.13 | 0.13 | 0.13 | 0.12 | 0.11 | 0.12 | 0.13 | 0.11 | 0.12 |
| MH | (N·m) | 0.58 | 0.57 | 0.68 | 0.60 | 0.46 | 0.45 | 0.38 | 0.42 | 0.52 | 0.54 |

| Normal state physical properties | | | | | | | | | | | |
|---|---|---|---|---|---|---|---|---|---|---|---|
| Hardness (Duro A) | | 58 | 58 | 58 | 59 | 58 | 57 | 61 | 59 | 58 | 55 |
| 100% modulus (MPa) | | 3.0 | 3.1 | 3.6 | 3.2 | 2.7 | 2.5 | 2.6 | 2.7 | 2.4 | 2.4 |
| Breaking strength (MPa) | | 11.0 | 11.2 | 11.8 | 12.3 | 11.6 | 11.4 | 11.7 | 11.6 | 10.3 | 10.0 |
| Elongation at break (%) | | 290 | 280 | 260 | 270 | 340 | 340 | 330 | 320 | 290 | 320 |

| Air oven aging test | | | | | | | | | | | |
|---|---|---|---|---|---|---|---|---|---|---|---|
| Hardness change (Duro A) | | +1 | +6 | +1 | +1 | +4 | +2 | +3 | +4 | +6 | +7 |
| 100% modulus change (%) | | -20 | -14 | -12 | -9 | -3 | -15 | +4 | -5 | -13 | -10 |
| Breaking strength change (%) | | -19 | -19 | -16 | -11 | -15 | -18 | -19 | -18 | -20 | -20 |
| Elongation at break change (%) | | +17 | +14 | +12 | +4 | -3 | +0 | +3 | +6 | +10 | +10 |
| Compression set (%) | | 19 | 22 | 17 | 17 | 35 | 30 | 39 | 26 | 24 | 18 |

### <Organic peroxide crosslinkable fluororubber composition>

**Basic Formulation F**

| | |
|---|---|
| Fluororubber A (iodine group-containing vinylidene fluoride-hexafluoropropylene (weight ratio 60:40) copolymer, iodine content: 0.3 wt.%, Mooney viscosity ML₁₊₁₀ (121°C) : 30) | 100 parts by weight |
| MT carbon black (Thermax MT produced by Cancarb Limited) | 15 parts by weight |
| Magnesium oxide (Kyowamag #150, produced by Kyowa Chemical Industry Co., Ltd.) | 5 parts by weight |
| 2,5-dimethyl-2,5-di(tert-butylperoxy)hexane | 3.5 parts by weight |
| (Perhexa 25B-40, produced by NOF Corporation, active ingredient: 40 %) | |
| Triallyl isocyanurate (Taic M60, produced by Nippon Kasei Co., Ltd., active ingredient: 60 %) | 5 parts by weight |

Each formulation was subjected to kneading, primary crosslinking, secondary crosslinking, and measurement of various characteristics in the same manner as described above. Table 6 below shows the obtained results.

**Table 6**

| Formulation | | Basic Formulation F |
|---|---|---|
| Crosslinking test | | |
| tc (10) | (min) | 0.59 |
| tc (90) | (min) | 0.84 |
| ML | (N·m) | 0.10 |
| MH | (N·m) | 1.85 |

| Normal state physical properties | | |
|---|---|---|
| Hardness | (Duro A) | 66 |
| 100% modulus | (MPa) | 3.1 |
| Breaking strength | (MPa) | 22.5 |
| Elongation at break | (%) | 340 |

| Air oven aging test | | |
|---|---|---|
| Hardness change | (Duro A) | +0 |
| 100% modulus change | (%) | -9 |
| Breaking strength change | (%) | +4 |
| Elongation at break change | (%) | +3 |
| Compression set | (%) | 36 |

Formulation G-1:
In the basic formulation F, the amount of MT carbon black was changed to 25 parts by weight, that of the magnesium oxide was changed to 1 part by weight, that of 2,5-dimethyl-2,5-di(tert-butylperoxy)hexane was changed to 1 part by weight, and that of triallyl isocyanurate was changed to 4 parts by weight, respectively.

Formulation G-2:
In the formulation G-1, the same amount (1 part by weight) of zinc oxides (two types of zinc oxide, produced by Honjo Chemical Corporation) was used in place of magnesium oxide.

Formulation G-3:
In the formulation G-1, the same amount (1 part by weight) of carnauba wax (VPA No.2, produced by DuPont) was used in place of magnesium oxide.

Formulation G-4:
In the formulation G-1, the same amount (1 part by weight) of 1,4-diazabicyclo[2.2.2]octane was used in place of magnesium oxide.

Formulation G-5:
In the formulation G-1, magnesium oxide was not used.

Formulations G-6 to G-8:
In the formulations G-3 to G-5, the same amount of fluororubber B (iodine group-containing vinylidene fluoride-tetrafluoroethylene-hexafluoropropylene (weight ratio of 51:19:30 terpolymer, iodine content : 0.3 wt.%, Mooney viscosity ML₁₊₁₀ (121°C) : 35) was used in place of fluororubber A.

Each formulation was subjected to kneading, primary crosslinking, secondary crosslinking, and measurement of normal state physical properties in the same manner as described above. Table 7 below shows the obtained results.

**Table 7**

| Formulation | | G-1 | G-2 | G-3 | G-4 | G-5 | G-6 | G-7 | G-8 |
|---|---|---|---|---|---|---|---|---|---|
| Crosslinking test | | | | | | | | | |
| tc (10) | (min) | 0.83 | 0.84 | 0.84 | 0.92 | 0.81 | 0.83 | 0.87 | 0.78 |
| tc (90) | (min) | 1.70 | 1.81 | 1.82 | 2.51 | 1.72 | 1.73 | 1.98 | 1.59 |
| ML | (N·m) | 0.09 | 0.09 | 0.09 | 0.07 | 0.08 | 0.13 | 0.09 | 0.13 |
| MH | (N·m) | 1.84 | 1.81 | 1.75 | 1.62 | 1.87 | 2.99 | 2.26 | 3.13 |

| Normal state physical properties | | | | | | | | | |
|---|---|---|---|---|---|---|---|---|---|
| Hardness (Duro A) | | 67 | 67 | 68 | 68 | 66 | 69 | 70 | 67 |
| 100% modulus (MPa) | | 2.8 | 2.5 | 2.4 | 2.9 | 2.6 | 3.0 | 3.6 | 3.4 |
| Breaking strength (MPa) | | 19.9 | 19.9 | 15.3 | 20.1 | 20.9 | 17.5 | 20.5 | 21.6 |
| Elongation at break (%) | | 420 | 460 | 480 | 340 | 470 | 370 | 320 | 320 |

| Air oven aging test | | | | | | | | | |
|---|---|---|---|---|---|---|---|---|---|
| Hardness change (Duro A) | | +0 | +0 | +0 | +0 | +0 | +1 | +0 | +1 |
| 100% modulus change (%) | | -3 | +1 | +18 | +29 | -4 | +23 | +9 | -9 |
| Breaking strength change (%) | | +16 | +9 | +30 | -45 | +2 | +21 | -25 | +15 |
| Elongation at change break (%) | | -5 | -13 | -19 | -47 | -17 | -11 | -31 | +9 |
| Compression set (%) | | 33 | 32 | 32 | 73 | 35 | 29 | 58 | 31 |

<Production of rubber uncrosslinked sheet>

The carboxyl group-containing acrylic rubber compositions of the formulations A-1 to A-8, B-1 to B-6, C-1 to C-4, D-1 to D-6 and E-1 to E-10, or the organic peroxide crosslinkable fluororubber compositions of the basic formulation F and the formulations G-1 to G-8 were each kneaded with an open roll. Then, the acrylic rubber compositions were formed into sheeting sheets having a thickness of about 4 mm, and uncrosslinked sheets (105 x 135 x 4 mm) were cut from these sheets. The fluororubber compositions were formed into sheeting sheets having a thickness of about 2 mm, and uncrosslinked sheets (105 x 135 x 2 mm) were cut from these sheets.

### <Production of rubber laminate>

In order to form an air chuck holding portion to be used during a peel test, a PTFE sheet (140 x 20 mm, 50 µm in thickness) was attached to the upper long side of the above acrylic rubber uncrosslinked sheet. Then, the above fluororubber uncrosslinked sheet was superimposed thereon to produce an uncrosslinked rubber laminate. This rubber laminate was placed in a metal mold (110 x 140 x 5.5 mm), and pressure-crosslinked at 160°C for 30 minutes. Subsequently, secondary crosslinking was carried out in an oven at 175°C for 4 hours, thereby obtaining a rubber laminate to be used for a peel test.

The obtained rubber laminates were subjected to a peel test in the following manner.

The rubber laminate was punched into strips (15 mm in width and 80 mm in length). While both ends of the air chuck holding portion were held by the air chuck of a tensile testing machine (Strograph E II, produced by Toyo Seiki Seisaku-sho, Ltd.), a T type peel test was performed at a rate of 50 mm/min to determine peel strength (unit: N/mm).

The bonding state was evaluated based on the peel strength obtained by the above tensile test, and the interfacial peeling rate determined by visual observation of the peeling interface. Specifically, in this evaluation, when the peel strength is larger and the peeling form is "rubber breakage", this means that the rubber laminate has excellent crosslinking bonding properties.

The interfacial peeling rate is an approximate value calculated from the area ratio (interfacial peeling area/total peeling area) by visual observation of the peeling interface.

An interfacial peeling rate of 100% means that the rubber layer on one side did not remain on the opposing rubber layer, that is, the rubber layers were each peeled along the interface without breakage. The peeling form was determined as "interfacial peeling."

An interfacial peeling rate of 0% means that the rubber layer on one side completely remained on the opposing rubber layer, that is, one rubber layer was completely broken. The peeling form was determined as "rubber breakage."

0% < interfacial peeling rate < 100% means that interfacial peeling and rubber breakage are mixed along the peeled surface. The peeling form was determined as partial interfacial peeling (briefly referred to as "partial").

Tables 8 and 9 below show the acrylic rubber compositions and fluororubber compositions used to constitute the rubber laminates, and the results of the peel test. In Comparative Example 10, measurement could not be carried out because foaming occurred in the laminate during molding.

**Table 8**

| | | | Peel test | | |
|---|---|---|---|---|---|
| Example | Acrylic rubber composition | Fluororubber composition | Peel strength (N/mm) | Interfacial peeling rate (%) | Peeling form |
| Comparative Example 1 | A-1 | F | 1.7 | 100 | Interfacial peeling |
| Example 1 | A-2 | F | 3.3 | 0 | Rubber breakage |
| Example 2 | A-3 | F (refernce) | 2.9 | 0 | Rubber breakage |
| Comparative Example 2 | C-1 | F | 2.9 | 20 | Partial |
| Comparative Example 3 | A-4 | F | 2.2 | 100 | Interfacial peeling |
| Example 3 | A-5 | F | 4.5 | 0 | Rubber breakage |
| Example 4 | A-6 | F (reference) | 4.3 | 0 | Rubber breakage |
| Comparative Example 4 | C-2 | F | 2.8 | 100 | Interfacial peeling |
| Comparative Example 5 | A-7 | F | 2.5 | 50 | Partial |
| Comparative Example 6 | A-8 | F | 2.8 | 30 | Partial |
| Comparative Example 7 | B-1 | F | 2.3 | 100 | Interfacial peeling |
| Example 5 | B-2 | F | 5.7 | 0 | Rubber breakage |
| Example 6 | B-3 | F (reference) | 4.3 | 0 | Rubber breakage |
| Comparative Example 8 | C-3 | F | 1.9 | 100 | Interfacial peeling |
| Comparative Example 9 | B-4 | F | 2.6 | 100 | Interfacial peeling |
| Example 7 | B-5 | F | 5.6 | 0 | Rubber breakage |
| Example 8 | B-6 | F (reference) | 5.5 | 0 | Rubber breakage |
| Comparative Example 10 | C-4 | F | - | - | - |
| Comparative Example 11 | D-1 | F | 0.7 | 100 | Interfacial peeling |
| Example 9 | D-2 | F (reference) | 2.8 | 20 | Partial |
| Example 10 | D-3 | F (reference) | 3.0 | 0 | Rubber breakage |
| Example 11 | D-4 | F (reference) | 3.3 | 20 | Partial |
| Example 12 | D-5 9 | F (reference) | 2.6 | 0 | Rubber breakage |
| Example 13 | D-6 | F (reference) | 3.1 | 0 | Rubber breakage |

**Table 9**

| | | | Peel test | | |
|---|---|---|---|---|---|
| Example | Acrylic rubber composition | Fluororubber composition | Peel strength (N/mm) | Interfacial peeling rate (%) | Peeling form |
| Example 14 | E-9 | G-5 (reference) | 5.0 | 0 | Rubber breakage |
| Example 15 | E-9 | G-3 (reference) | 4.9 | 0 | Rubber breakage |
| Example 16 | E-9 | G-2 (reference) | 5.1 | 0 | Rubberbreakage |
| Example 17 | E-9 | G-1 (reference) | 5.1 | 0 | Rubberbreakage |
| Comparative Example 12 | E-10 | G-5 | 3.3 | 100 | Interfacial peeling |
| Comparative Example 13 | E-1 | G-5 | 3.4 | 100 | Interfacial peeling |
| Example 18 | E-2 | G-5 | 5.2 | 0 | Rubber breakage |
| Example 19 | E-3 | G-5 (reference) | 4.2 | 0 | Rubberbreakage |
| Comparative Example 14 | E-4 | G-5 | 1.5 | 100 | Interfacial peeling |
| Comparative Example 15 | E-6 | G-5 | 3.9 | 100 | Interfacial peeling |
| Example 20 | E-5 | G-5 | 7.0 | 0 | Rubber breakage |
| Comparative Example 16 | E-1 | G-4 | 3.8 | 100 | Interfacial peeling |
| Example 21 | E-7 | G-5 | 5.9 | 0 | Rubber breakage |
| Comparative Example 17 | E-8 | G-5 | 3.7 | 100 | Interfacial peeling |
| Comparative Example 18 | E-1 | G-8 | 2.8 | 100 | Interfacial peeling |
| Example 22 | E-2 | G-8 | 5.3 | 0 | Rubber breakage |
| Example 23 | E-2 | G-6 | 4.9 | 0 | Rubber breakage |
| Comparative Example 19 | E-1 | G-7 | 3.2 | 90 | Partial |

### Example 24

### < Carboxyl group-containing acrylic rubber composition >

Formulation H:
In the basic formulation B, the same amount (2 parts by weight) of 1,3-diphenylguanidine (Nocceler D) was used in place of 1,3-di-o-tolylguanidine. Moreover, thickness of sheeting sheet was changed to 2 mm.

Formulation H-1:
The basic formulation H was used as it was.

Formulation H-2:
In the basic formulation H, stearyl amine and 1,3-diphenylguanidine were not used, and 2 parts by weight of 1,8-diazabicyclo[5.4.0]undecene-7-dibasic acid salt-amorphous silica (weight ratio 70:30) mixture (Vulcofac ACT55, produced by Safic Alcan) was used.

Formulation H-3:
In the basic formulation H, stearyl amine and 1,3-diphenylguanidine were not used, and 2 parts by weight of active amine-retardant synthetic mixture-acrylic polymer (weight ratio 60:40) mixture (Rhenogran XLA60, produced by Lanxess) was used.

Formulation H-4:
In the basic formulation H, the amount of FEF carbon black was changed to 60 parts by weight, and 5 parts by weight of polyether ester-based plasticizer (Adekacizer RS700) was further used.

Formulation H-5:
In the formulation H-4, stearyl amine and 1,3-diphenylguanidine were not used, and 2 parts by weight of Rhenogran XLA60 was used.

Formulation H-6:
In the basic formulation H, the same amount (2 parts by weight) of 1,3-di-o-tolylguanidine was used in place of 1,3-diphenylguanidine.

Formulation H-7:
In the formulation H-6, stearyl amine was not used.

Each formulation was subjected to kneading, primary crosslinking, secondary crosslinking, and measurement of normal state physical properties in the same manner as in Example 1. Table 10 below shows the obtained results.

**Table 10**

| Formulation | Hardness (Duro A) | 100% Mo (MPa) | Breaking strength (MPa) | Elongation at break (%) |
|---|---|---|---|---|
| H-1 | 58 | 2.7 | 11.6 | 340 |
| H-2 | 63 | 4.1 | 12.5 | 240 |
| H-3 | 62 | 4.3 | 12.2 | 240 |
| H-4 | 54 | 2.4 | 10.5 | 350 |
| H-5 | 58 | 3.5 | 11.0 | 250 |
| H-6 | 59 | 2.7 | 12.3 | 310 |
| H-7 | 61 | 3.5 | 12.8 | 270 |

Table 11 below shows the acrylic rubber compositions and fluororubber compositions used to constitute the rubber laminates, and the results of the peel test. However, each rubber laminate was structured to be a three-layer structure of acrylic rubber A, acrylic rubber B, and fluororubber and an air chuck holding portion, which was a PTFE sheet (140 x 30 mm, 50 µm in thickness), was formed in the acrylic rubber B.

**Table 11**

| | | | | Peel test | | |
|---|---|---|---|---|---|---|
| Acrylic rubber Example | compositions | | Fluororubber composition | Peel strength (N/mm) | Interfacial peeling rate (%) | Peeling form |
| | A | B | | | | |
| 25 | H-2 | H-1 | G-5 | 7.9 | 0 | Rubber breakage |
| 26 | H-3 | H-1 | G-5 | 7.9 | 0 | Rubber breakage |
| 27 | H-5 | H-4 | G-5 | 7.2 | 0 | Rubber breakage |
| 28 | H-2 | H-6 | G-5 | 5.5 | 0 | Rubber breakage |
| 29 | H-3 | H-6 | G-5 | 5.7 | 0 | Rubber breakage |
| 30 | H-3 | H-7 | G-5 | 5.0 | 0 | Rubber breakage |

These results indicated that when an acrylic rubber layer in contact with a fluororubber layer contained 1,4-diazabicyclo[2.2.2]octane, an effective rubber laminate could be formed, even though another acrylic rubber layer in contact with the acrylic rubber layer did not contain 1,4-diazabicyclo[2.2.2]octane; and that it was possible to effectively reduce the amount of expensive 1,4-diazabicyclo[22.2]octane.

In the case of a rubber laminate in which one acrylic rubber layer and one fluororubber layer are laminated, the acrylic rubber layer can have a thickness corresponding to the use of the rubber laminate. However, when two acrylic rubber layers are used for lamination with a fluororubber layer, the thickness of a 1,4-diazabicyclo[2.2.2]octane-containing acrylic rubber layer in contact with the fluororubber layer is generally set to about 0.1 to 20 mm, preferably about 0.5 to 10 mm and the thickness of an acrylic rubber layer that is not in direct contact with the fluororubber layer is generally set to about 1 to 30 mm, preferably about 1 to 20 mm. If the thickness of the 1,4-diazabicyclo[2.2.2]octane-containing acrylic rubber layer is equal to or less than this range, the interlaminar bonding force between the acrylic rubber layer and the fluororubber layer becomes hard to be obtained. The thickness of the fluororubber layer is set to about 0.1 to 10 mm, preferably about 0.5 to 5 mm.

## Claims

1. A carboxyl group-containing acrylic rubber composition comprising
(A) carboxyl group-containing acrylic rubber,
(B) 1,4-diazabicyclo[2.2.2]octane,
(C) a primary amine represented by the general formula RNH₂, wherein R is an aliphatic hydrocarbon group having 1 to 30 carbon atoms,
(D) a crosslinking agent for carboxyl group-containing acrylic rubber, and
(E) a guanidine-based, thiuram-based, or thiourea-based crosslinking accelerator.

2. The carboxyl group-containing acrylic rubber composition according to claim 1, wherein the crosslinking agent for carboxyl group-containing acrylic rubber is a polyvalent amine compound or a carbonate derivative thereof.

3. The carboxyl group-containing acrylic rubber composition according to claim 2, wherein the polyvalent amine compound or the derivative thereof is hexamethylenediamine carbamate or 2,2-bis[4-(4-aminophenoxy)phenyl]propane.

4. The carboxyl group-containing acrylic rubber composition according to claim 1, wherein the guanidine-based crosslinking accelerator is 1,3-di-o-tolylguanidine, 1,1,3,3-tetramethylguanidine, or 1,3-diphenylguanidine.

5. The carboxyl group-containing acrylic rubber composition according to claim 1, wherein the thiuram-based crosslinking accelerator is tetramethylthiuram disulfide.

6. The carboxyl group-containing acrylic rubber composition according to claim 1, wherein the thiourea-based crosslinking accelerator is N,N'-diphenylthiourea.

7. The carboxyl group-containing acrylic rubber composition according to claim 1, wherein the primary amine represented by the general formula RNH₂ is stearyl amine.

8. The carboxyl group-containing acrylic rubber composition according to claim 1, which is used at a ratio of 0.01 to 3 parts by weight of the component (B), 0 to 5 parts by weight of the component (C), 0.1 to 5 parts by weight of the component (D), and 0.5 to 5 parts by weight of the component (E) based on 100 parts by weight of the component (A).

9. A rubber laminate prepared by crosslinking bonding a layer of the carboxyl group-containing acrylic rubber composition comprising
(A) carboxyl group-containing acrylic rubber,
(B) 1,4-diazabicyclo[2.2.2]octane,
(C) a primary amine represented by the general formula RNH₂, wherein R is an aliphatic hydrocarbon group having 1 to 30 carbon atoms,
(D) a crosslinking agent for carboxyl group-containing acrylic rubber, and
(E) a guanidine-based, thiuram-based, or thiourea-based crosslinking accelerator
and a layer of an organic peroxide crosslinkable fluororubber composition comprising
(a) organic peroxide crosslinkable fluororubber,
(b) an organic peroxide crosslinking agent, and
(c) a polyfunctional unsaturated compound crosslinking aid.

10. The rubber laminate according to claim 9, wherein the polyfunctional unsaturated compound crosslinking aid is triallyl isocyanurate.

11. The rubber laminate according to claim 9, wherein the organic peroxide crosslinkable fluororubber composition layer comprises 0.1 to 5 parts by weight of the component (b) and 0.1 to 10 parts by weight of the component (c) based on 100 parts by weight of the component (a).

12. The rubber laminate according to claim 9, wherein a layer of a 1,4-diazabicyclo[2.2.2]octane-free carboxyl group-containing acrylic rubber composition that has crosslinking bonding properties to the carboxyl group-containing acrylic rubber composition layer containing 1,4-diazabicyclo[2.2.2]octane is further laminated on the carboxyl group-containing acrylic rubber composition layer crosslinking-bonded to the organic peroxide crosslinkable fluororubber composition layer.

## Patentansprüche

1. Carboxylgruppenhaltige Acrylkautschukzusammensetzung, umfassend
(A) carboxylgruppenhaltigen Acrylkautschuk,
(B) 1,4-Diazabicyclo[2.2.2]octan,
(C) ein primäres Amin, dargestellt durch die allgemeine Formel RNH₂, worin R eine aliphatische Kohlenwasserstoffgruppe mit 1 bis 30 Kohlenstoffatomen ist,
(D) ein Vernetzungsmittel für carboxylgruppenhaltigen Acrylkautschuk und
(E) einen Vernetzungsbeschleuniger auf Guanidin-, Thiuram- oder Thioharnstoff-Basis.

2. Carboxylgruppenhaltige Acrylkautschukzusammensetzung nach Anspruch 1, wobei das Vernetzungsmittel für carboxylgruppenhaltigen Acrylkautschuk eine polyvalente Aminverbindung oder ein Carbonatderivat davon ist.

3. Carboxylgruppenhaltige Acrylkautschukzusammensetzung nach Anspruch 2, wobei die mehrwertige Aminverbindung oder das Derivat davon Hexamethylendiamincarbamat oder 2,2-Bis[4-(4-aminophenoxy)phenyl]propan ist.

4. Carboxylgruppenhaltige Acrylkautschukzusammensetzung nach Anspruch 1, wobei der Vernetzungsbeschleuniger auf Guanidinbasis 1,3-Di-o-tolylguanidin, 1,1,3,3-Tetramethylguanidin oder 1,3-Diphenylguanidin ist.

5. Carboxylgruppenhaltige Acrylkautschukzusammensetzung nach Anspruch 1, wobei der Vernetzungsbeschleuniger auf Thiurambasis Tetramethylthiuramdisulfid ist.

6. Carboxylgruppenhaltige Acrylkautschukzusammensetzung nach Anspruch 1, wobei der Vernetzungsbeschleuniger auf Thioharnstoffbasis N,N'-Diphenylthioharnstoff ist.

7. Carboxylgruppenhaltige Acrylkautschukzusammensetzung nach Anspruch 1, wobei das durch die allgemeine Formel RNH₂ dargestellte primäre Amin Stearylamin ist.

8. Carboxylgruppenhaltige Acrylkautschukzusammensetzung nach Anspruch 1, die in einem Verhältnis von 0,01 bis 3 Gewichtsteilen der Komponente (B), 0 bis 5 Gewichtsteilen der Komponente (C), 0,1 bis 5 Gewichtsteilen der Komponente (D) und 0,5 bis 5 Gewichtsteilen der Komponente (E), bezogen auf 100 Gewichtsteile der Komponente (A), eingesetzt wird.

9. Kautschuklaminat, hergestellt durch vernetzendes Verbinden einer Schicht der carboxylgruppenhaltigen Acrylkautschukzusammensetzung, umfassend
(A) carboxylgruppenhaltigen Acrylkautschuk,
(B) 1,4-Diazabicyclo[2.2.2]octan,
(C) ein primäres Amin, dargestellt durch die allgemeine Formel RNH₂, worin R eine aliphatische Kohlenwasserstoffgruppe mit 1 bis 30 Kohlenstoffatomen ist,
(D) ein Vernetzungsmittel für carboxylgruppenhaltigen Acrylkautschuk und
(E) ein Vernetzungsbeschleuniger auf Guanidin-, Thiuram- oder Thioharnstoff-Basis
und einer Schicht aus einer mit organischem Peroxid vernetzbaren Fluorkautschukzusammensetzung, umfassend
(a) organischen peroxidisch vernetzbaren Fluorkautschuk,
(b) ein organisches Peroxid-Vernetzungsmittel, und
(c) eine polyfunktionelle ungesättigte Verbindung als Vernetzungshilfe.

10. Kautschuklaminat nach Anspruch 9, wobei das Vernetzungshilfsmittel aus einer polyfunktionellen ungesättigten Verbindung Triallylisocyanurat ist.

11. Kautschuklaminat nach Anspruch 9, wobei die mit organischem Peroxid vernetzbare Fluorkautschukzusammensetzungsschicht 0,1 bis 5 Gewichtsteile der Komponente (b) und 0,1 bis 10 Gewichtsteile der Komponente (c), bezogen auf 100 Gewichtsteile der Komponente (a), umfasst.

12. Kautschuklaminat nach Anspruch 9, wobei eine Schicht einer 1,4-Diazabicyclo[2.2.2]octan-freien carboxylgruppenhaltigen Acrylkautschukzusammensetzung, die Vernetzungsbindungseigenschaften zu der carboxylgruppenhaltigen Acrylkautschukzusammensetzungsschicht aufweist, die 1,4-Diazabicyclo[2.2.2]octan enthält, weiterhin auf die carboxylgruppenhaltige Acrylkautschukzusammensetzungsschicht laminiert ist, die mit der mit organischem Peroxid vernetzbaren Fluorkautschukzusammensetzungsschicht vernetzt ist.

## Revendications

1. Composition de caoutchouc acrylique contenant des groupes carboxyle, comprenant
(A) caoutchouc acrylique contenant un groupe carboxyle,
(B) 1,4-diazabicyclo[2.2.2]octane,
(C) une amine primaire représentée par la formule générale RNH₂, dans laquelle R est un groupe hydrocarboné aliphatique ayant 1 à 30 atomes de carbone,
(D) un agent de réticulation pour caoutchouc acrylique contenant des groupes carboxyle, et
(E) un accélérateur de réticulation à base de guanidine, de thiurame ou de thiourée.

2. Composition de caoutchouc acrylique contenant des groupes carboxyle selon la revendication 1, dans laquelle l'agent de réticulation pour caoutchouc acrylique contenant des groupes carboxyle est un composé amine polyvalent ou un dérivé carbonate de celui-ci.

3. Composition de caoutchouc acrylique contenant des groupes carboxyle selon la revendication 2, dans laquelle le composé amine polyvalent ou son dérivé est le carbamate d'hexaméthylènediamine ou le 2,2-bis[4-(4-aminophénoxy)phényl]propane.

4. Composition de caoutchouc acrylique contenant des groupes carboxyle selon la revendication 1, dans laquelle l'accélérateur de réticulation à base de guanidine est la 1,3-di-o-tolylguanidine, la 1,1,3,3-tétraméthylguanidine ou la 1,3-diphénylguanidine.

5. Composition de caoutchouc acrylique contenant des groupes carboxyle selon la revendication 1, dans laquelle l'accélérateur de réticulation à base de thiurame est le disulfure de tétraméthylthiurame.

6. Composition de caoutchouc acrylique contenant des groupes carboxyle selon la revendication 1, dans laquelle l'accélérateur de réticulation à base de thiourée est la N,N'-diphénylthiourée.

7. Composition de caoutchouc acrylique contenant un groupe carboxyle selon la revendication 1, dans laquelle l'amine primaire représentée par la formule générale RNH₂ est la stéarylamine.

8. Composition de caoutchouc acrylique contenant des groupes carboxyle selon la revendication 1, qui est utilisée à un rapport de 0,01 à 3 parties en poids du composant (B), 0 à 5 parties en poids du composant (C), 0,1 à 5 parties en poids du composant (D), et 0,5 à 5 parties en poids du composant (E) sur la base de 100 parties en poids du composant (A).

9. Stratifié de caoutchouc préparé en liant par réticulation une couche de la composition de caoutchouc acrylique contenant des groupes carboxyle, comprenant
(A) caoutchouc acrylique contenant un groupe carboxyle,
(B) 1,4-diazabicyclo[2.2.2]octane,
(C) une amine primaire représentée par la formule générale RNH₂, dans laquelle R est un groupe hydrocarboné aliphatique ayant 1 à 30 atomes de carbone,
(D) un agent de réticulation pour caoutchouc acrylique contenant des groupes carboxyle, et
(E) un accélérateur de réticulation à base de guanidine, de thiurame ou de thiourée;
et une couche d'une composition de caoutchouc fluoré réticulable au peroxyde organique comprenant
(a) caoutchouc fluoré réticulable par peroxyde organique,
(b) un agent de réticulation de type peroxyde organique, et
(c) un auxiliaire de réticulation à base de composé insaturé polyfonctionnel.

10. Stratifié de caoutchouc selon la revendication 9, dans lequel l'aide à la réticulation du composé insaturé polyfonctionnel est l'isocyanurate de triallyle.

11. Stratifié en caoutchouc selon la revendication 9, dans lequel la couche de composition de caoutchouc fluoré réticulable par peroxyde organique comprend 0,1 à 5 parties en poids du composant (b) et 0,1 à 10 parties en poids du composant (c) sur la base de 100 parties en poids du composant (a).

12. Stratifié de caoutchouc selon la revendication 9, dans lequel une couche d'une composition de caoutchouc acrylique contenant un groupe carboxyle sans 1,4-diazabicyclo[2.2.2]octane qui a des propriétés de liaison par réticulation à la couche de composition de caoutchouc acrylique contenant un groupe carboxyle contenant du 1,4-diazabicyclo[2.2.2]octane est en outre stratifiée sur la couche de composition de caoutchouc acrylique contenant un groupe carboxyle liée par réticulation à la couche de composition de caoutchouc fluoré réticulable au peroxyde organique.
